# EUROPEAN PATENT APPLICATION

(11) **EP 3 284 656 A1**
(43) Date of publication of application: **21.02.2018**
(21) Application number: 17184850.0
(22) Date of filing: 04.08.2017
(51) Int. Cl.: B62D 15/02, G05D 1/00

(54) **SYSTEM AND METHOD FOR CONTROLLING PARKING FUNCTIONS OF A MOTOR VEHICLE**

(30) Priority: 19.08.2016 US 201615242162
(71) Applicant: Dura Operating, LLC, Auburn Hills, MI 48326 (US)
(72) Inventor: UNVEREN, Cumhur, Commerce Township, MI Michigan 48390 (US); HOFFMAN, Robert John, Royal Oak, MI Michigan 48067 (US); KARJALA, Sandeep, Troy, MI Michigan 48083 (US)
(74) Representative: Bungartz Christophersen Partnerschaft mbB Patentanwälte

(57) **Abstract**

A method for directing a host vehicle to perform automatic valet functions includes receiving a first input to access an automatic valet system. The method further includes presenting an automatic valet system management interface having at least two selectable functions including an autonomous park function and an autonomous unpark function. The method further includes receiving a second input to select one of the at least two functions of the automatic valet system. The method further includes presenting information related to the selected function. The method further includes receiving a third input to direct the automatic valet system to perform the selected function. The method further includes presenting an option to cancel the selected function for a predetermined period of time, and presenting a status of the host vehicle as it performs the selected function.

## Description

### FIELD

The invention relates generally to automated driver assistance systems for host vehicles, and more particularly to automated driver assistance systems for engaging and controlling automatic valet functions of a host vehicle.

### BACKGROUND

The statements in this section merely provide background information related to the present disclosure and may or may not constitute prior art.

Smart car technologies such as free-ranging on grid navigation, as well as parking guidance and information systems, aid in the prevention of human error when drivers operate a vehicle. Such technologies have been used to improve navigation of roadways, and to augment the parking abilities of motor vehicle drivers while the drivers are present within the motor vehicle. For example, rear view camera systems and impact alert systems have been developed to assist the operator of the motor vehicle while parking to avoid collisions. In addition, autonomous parking systems have been developed that autonomously park the motor vehicle in a parallel parking spot once the operator of the motor vehicle has positioned the motor vehicle in a predefined location proximate the parking spot.

While these systems are useful for their intended purpose, they require that the operator of the motor vehicle locate the parking spot and drive to the parking spot. Thus, there is a need in the art for improved smart car technologies that utilize preexisting infrastructure to autonomously park a motor vehicle. Moreover, there is a need to implement automatic parking systems in motor vehicles that do not increase cost, and which also increase the accuracy and robustness of parking systems while providing additional redundant ease of access and safety features.

### SUMMARY

In accordance with one aspect of the present invention a method for directing a host vehicle to perform automatic valet functions includes receiving a first input to access an automatic valet system. The method further includes presenting an automatic valet system management interface having at least two selectable functions including an autonomous park function and an autonomous un-park function. The method further includes receiving a second input to select one of the at least two functions of the automatic valet system. The method further includes presenting information related to the selected function. The method further includes receiving a third input to direct the automatic valet system to perform the selected function. The method further includes presenting an option to cancel the selected function for a predetermined period of time; and presenting a status of the host vehicle as it performs the selected function.

In another aspect of the present invention receiving a first input further includes selecting an automatic valet system in an HMI of a host vehicle and selecting an automatic valet system management interface on a mobile device.

In yet another aspect of the present invention presenting an automatic valet system management interface further includes presenting a primary menu portion, a secondary menu portion, and a display portion on the mobile device.

In yet another aspect of the present invention presenting a primary menu portion further includes presenting a plurality of buttons, each button providing access to one of the selectable functions of the automatic valet system.

In yet another aspect of the present invention receiving a second input further includes pressing a first of the plurality of buttons for an extended duration the receiving a third input further comprises pressing a confirmation button, and the confirmation button is displayed in the secondary menu portion only after the first of the plurality of buttons is pressed for the extended duration.

In yet another aspect of the present invention in response to receiving the third input to the automatic valet system management interface, the method further includes directing the automatic valet system to perform an action corresponding to one or more of the inputs received.

In yet another aspect of the present invention in response to receiving a second input to select one of the at least two functions of the automatic valet system, the method further includes displaying within the display portion automatic valet system data corresponding to a plurality of vehicle position characteristics, the plurality of vehicle position characteristics includes at least one of a distance measurement, a target location, an estimated time to the target location, a map, and a depiction of objects detected by a sensor array equipped to the vehicle.

In yet another aspect of the present invention a method for directing a host vehicle to perform automatic valet functions includes receiving a first input to an HMI to access an automatic valet system in a host vehicle. The method further includes presenting an automatic valet system management interface on a mobile device in wireless communication with the host vehicle, the automatic valet system management interface having a primary menu bar, a secondary menu bar, and a display portion. The method further includes presenting at least two selectable functions within the primary menu bar including an autonomous park function and an autonomous un-park function. The method further includes receiving a second input to select one of the at least two functions of the automatic valet system. The method further includes presenting information related to the selected function within the display portion. The method further includes presenting a secondary menu bar. The method further includes receiving a third input to direct the automatic valet system to perform the selected function. The method further includes presenting within the secondary menu bar an option to cancel the selected function for a predetermined period of time, and presenting within the display portion a status of the host vehicle as it performs the selected function.

In yet another aspect of the present invention presenting at least two selectable functions further includes presenting a plurality of buttons for selecting automatic valet system functions, and the primary menu bar is persistent.

In yet another aspect of the present invention the plurality of buttons include a first button for receiving the second input to command the host vehicle to initiate a park function, a second button for receiving the second input to command the host vehicle to initiate an un-park function, and a third button for receiving the second input to command the host vehicle to initiate the park and/or un-park functions based on a voice command from a user.

In yet another aspect of the present invention the receiving the second input to select one of the at least two functions further includes requiring a user to press the first button or the second button for a predetermined duration of time to activate the automatic valet system to command the vehicle to perform the selected function.

In yet another aspect of the present invention presenting the secondary menu bar further includes presenting a confirmation button and a cancel button.

In yet another aspect of the present invention the method further includes presenting within the display portion a status of the host vehicle automatic valet system; the status includes at least a target location, a time to the target location, and a distance to the target location.

In yet another aspect of the present invention a system for controlling parking functions of a host vehicle includes a human machine interface (HMI) disposed within the host vehicle. The system further includes a parking system configured to autonomously park or un-park the host vehicle. The system further includes an application accessible through the HMI, the application including a primary menu bar, a secondary menu bar, and a display portion and having a selectable feature disposed in the primary menu bar for selecting a parking system function, and having a selectable feature disposed in the secondary menu bar for engaging the parking system of the host vehicle to perform the parking system function.

In yet another aspect of the present invention the primary menu bar further includes a plurality of buttons for selecting parking system functions, and the primary menu bar is persistent throughout the application.

In yet another aspect of the present invention the plurality of buttons includes a first button for priming the parking system to command the host vehicle to initiate a park function, a second button for priming the parking system to command the host vehicle to initiate an un-park function, and a third button for priming the parking system to initiate the park and/or un-park functions based on a voice command from a user.

In yet another aspect of the present invention the first button and second button further include a predetermined time, and upon being pressed by a user, the first button and/or the second button only activate the parking system to command the vehicle to park and/or un-park if the first and/or second button has been pressed for the predetermined time.

In yet another aspect of the present invention the secondary menu bar is displayed after the predetermined time has been reached, and the secondary menu bar provides a confirmation button and a cancel button.

In yet another aspect of the present invention the display portion includes a status of the host vehicle parking system, and the status includes at least a target location, a time to the target location, and a distance to the target location.

### BRIEF DESCRIPTION OF THE DRAWINGS

The drawings described herein are for illustration purposes only and are not intended to limit the scope of the present disclosure in any way. The components in the figures are not necessarily to scale, emphasis instead being placed upon illustrating the principles of the invention. Moreover, in the figures, like reference numerals designate corresponding parts throughout the views. In the drawings:
FIG. 1 is a schematic diagram of a host vehicle having an automatic valet system according to the principles of the present disclosure;
FIG. 2 is a flow chart depicting a method for using the automatic valet system according to the principles of the present disclosure;
FIG. 3 is a screen shot of an automatic valet system management interface of the automatic valet system, the interface displaying a several selectable functions according to the principles of the present disclosure;
FIG. 4 is a screen shot of the automatic valet system management interface of the automatic valet system, the interface displaying additional selectable functions according to the principles of the present disclosure;
FIG. 5a is a screen shot of the automatic valet system management interface of the automatic valet system displaying sensor scan information according to the principles of the present disclosure;
FIG. 5b is a screen shot of the automatic valet system management interface of the automatic valet system displaying sensor scan information according to the principles of the present disclosure;
FIG. 5c is a screen shot of the automatic valet system management interface of the automatic valet system displaying sensor scan information according to the principles of the present disclosure;
FIG. 6 is a screen shot of the automatic valet system management interface of the automatic valet system displaying host vehicle position information according to the principles of the present disclosure; and
FIG. 7 is a screen shot of the automatic valet system management interface displaying a completion status a selectable function of the automatic valet system according to the principles of the present disclosure.

### DETAILED DESCRIPTION

The following description is merely exemplary in nature and is not intended to limit the present disclosure, application or uses.

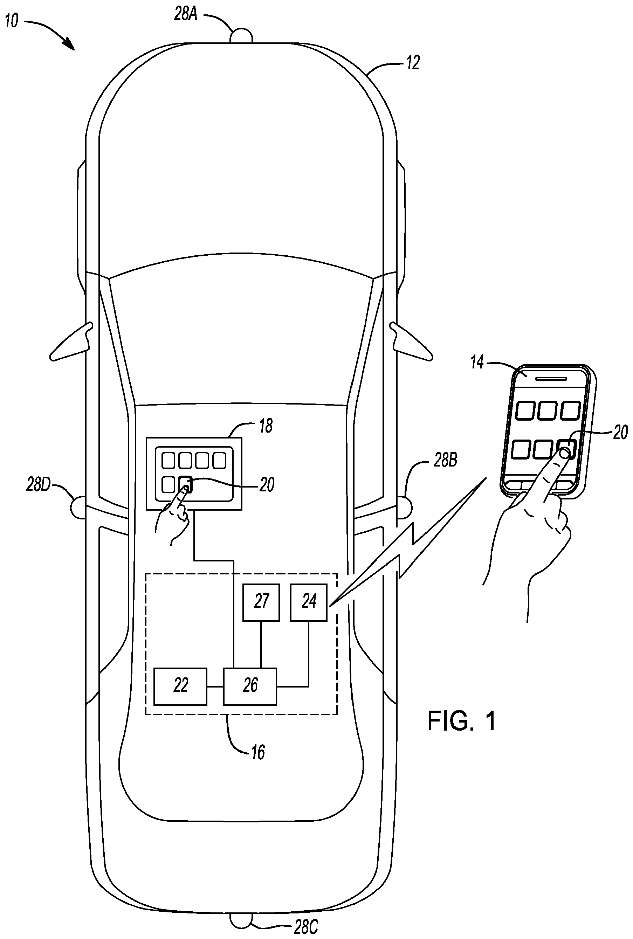

With reference to FIG. 1 a system and method for directing a host vehicle to perform automatic valet functions is generally indicated by reference to automatic valet system 10. The system 10 is used with an exemplary host vehicle 12 and an exemplary mobile device 14. The host vehicle 12 is illustrated as a passenger vehicle, however, the host vehicle 12 may be a truck, sport utility vehicle, van, motor home, or any other type of vehicle without departing from the scope of the present disclosure. The mobile device 14 is preferably a mobile phone, however, the mobile device 14 may be a mobile computer, laptop, tablet, smart watch, or any other device in wireless communication with the host vehicle 12. The system 10 includes an automatic parking system 16, a human machine interface (HMI) 18, and an automatic valet application 20.

The automatic parking system 16 is operable to autonomously park and un-park the host vehicle 12. The automatic parking system 16 may have various configurations without departing from the scope of the present disclosure but generally includes a sensor sub-system 22 and a communication sub-system 24 in communication with a controller 26. The controller 26 communicates with a vehicle control system 27. The sensor sub-system 22 includes a plurality of sensors 28A-D mounted along the periphery of the host vehicle 12. It should be appreciated that the sensor sub-system 22 may have any number of sensors 28 without departing from the scope of the disclosure. Each of the sensors 28A-D is operable to collect or sense information in a predefined area surrounding the host vehicle 12. Information from the sensors 28A-D is communicated to the controller 26. In a preferred embodiment, the sensors 28A-D are Light Detection and Ranging (LiDAR) sensors. However, the sensors 28A-D may be cameras, radar or sonar sensors, or any other type of proximity sensors. The communications sub-system 24 includes a receiver/transmitter operable to receive and/or transmit wireless data to the mobile device 14. The wireless data is communicated to the controller 26. The controller 26 is a non-generalized, electronic control device having a preprogrammed digital computer or processor, memory or non-transitory computer readable medium used to store data such as control logic, instructions, image data, lookup tables, etc., and a plurality of input/output peripherals or ports. The processor is configured to execute the control logic or instructions. The controller 26 may have additional processors or additional integrated circuits in communication with the processor, such as perception logic circuits for analyzing the sensor data.

The vehicle control system 27 includes any systems that implement an autonomous valet functions including an autonomous park function and an autonomous un-park function. For example, the vehicle control system 27 may include a braking control system, throttle control system, steering control system, body control system, etc. The vehicle control system 27 may also include any advanced driver assistance system (ADAS) functions that automate, adapt, or enhance vehicle systems in order to increase vehicle safety and/or operator driving performance. For example, the vehicle control system 27 may include ADAS technologies that alert the driver to potential problems or to avoid collisions by implementing safeguards, such as autonomously controlling the host vehicle 12. The vehicle control system 27 may also include ADAS features that enhance certain systems, such as automated lighting, adaptive cruise control, automated braking, or improved blind spot elimination using camera technology.

The HMI 18 is disposed within the cabin of the host vehicle 12 and is in communication with the controller 26. The HMI 18 is preferably a touch screen accessible by an operator of the host vehicle 12. However, the HMI 18 may be any haptic, verbal, or gesture controls without departing from the scope of the present disclosure. The HMI 18 is equipped with the automatic valet application 20. In a preferred embodiment, an operator of the host vehicle 12 accesses the automatic valet application 20 through selecting an icon corresponding to the automatic valet application 20 on the HMI 18. The mobile device 14 is also equipped with the automatic valet application 20. In one aspect, the operator of the host vehicle 12 accesses the automatic valet application 20 through the HMI 18, and/or the mobile device 14.

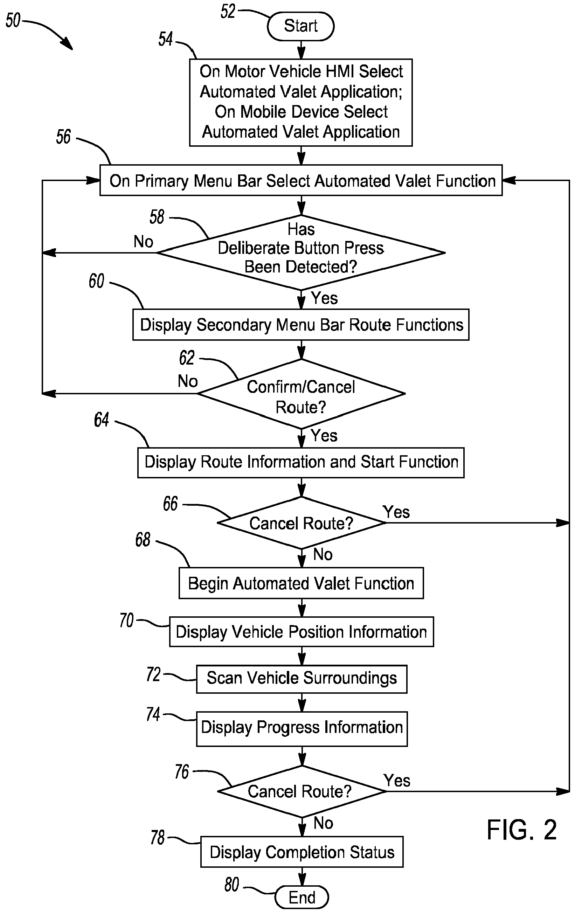

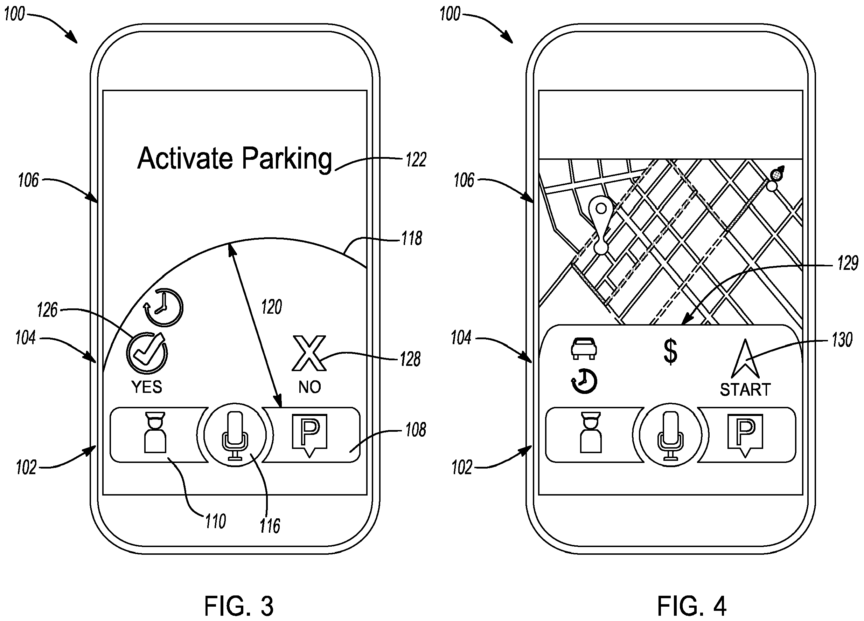

Turning now to FIGS. 2 and 3, and with continuing reference to FIG. 1, a method 50 for directing the host vehicle 12 to perform automatic valet functions using the automatic valet application 20 begins at block 52. At block 54, the automatic valet application 20 is accessed via either the HMI 18 or the mobile device 14. While for ease of explanation, the discussion that follows focuses on accessing the automatic valet application 20 through the HMI 18, it should be understood that the automatic valet application 20 may also be accessed and used from any mobile device 14 in wireless communication with the host vehicle 12, and onto which the automatic valet application 20 has been installed. Thus, for each reference in which the automatic valet application 20 is discussed as being accessed on the HMI 18 of the host vehicle 12, it should be understood that the mobile device 14 can be substituted or used as a supplement to the HMI 18 without departing from the scope or intent of this disclosure.

Once the automatic valet application 20 has been selected on the HMI 18, the HMI 18 displays an automatic valet system management interface 100, shown in FIG. 3. The automatic valet system management interface 100 is subdivided into at least three portions, including a primary menu bar 102, a secondary menu bar 104, and a display portion 106. The primary menu bar 102 has a persistent on-screen presence whenever the system management interface 100 is being displayed. That is, the primary menu bar 102 remains on-screen during the duration of the use of the system management interface 100. The primary menu bar 102 presents at least two selectable functions including an autonomous park function, and an autonomous un-park or retrieval function.

In order to engage the autonomous park function of the host vehicle 12, the operator presses a corresponding park button 108 within the primary menu bar 102 at block 56. Similarly, when the operator wishes to engage the autonomous un-park or retrieval function, the operator presses a corresponding un-park button 110 within the primary menu bar 102. In one aspect, a voice button 116 is also presented within the primary menu bar 102. The voice button 116 engages a microphone (not shown) of the host vehicle 12 or the mobile device 14 for receiving from the host vehicle operator voice commands to direct the automated valet system 10 to park or un-park the host vehicle 12. To reduce the likelihood of unintentional activation of the autonomous park or un-park functions, at block 58 the automatic valet application 20 requires a deliberate button press on the part of the operator. If the deliberate button press is not detected by the automatic valet application 20, the method returns to block 56. The automatic valet application 20 deliberate button press requires the operator to press and hold the park or un-park button 108, 110 for a predetermined duration. The predetermined duration is a period of time for a button press that has been determined to be of greater duration than a majority of unintentional button presses. For example, the button press may be in the range of 0-10 seconds. During the deliberate button press, the display portion 106 of the system management interface 100 displays data corresponding to the button being pressed. For example, the display portion 106 displays a counter 118, or message corresponding to the park function 108. In one aspect, the counter 118 is a semi-circular, radially-expanding shaded portion of the system management interface 100. In the example, the counter 118 remains on-screen and a counter radius 120 extends until the predetermined duration for the deliberate button press has been met. Additionally, the display portion 106 displays a message 122 corresponding to the function being accessed. In the example in which the park function 108 is being selected by the operator, the message 122 includes the text, "Activate Parking." Additional information corresponding to the function being selected during the deliberate button press may be displayed without departing form the scope or intent of this disclosure. For example, while the display portion 106 is described as displaying a counter 118, and a message 122, the display portion 106 may also display a warning semaphore, color-coded message, etc. corresponding to the function being selected. Furthermore, while the deliberate button press is discussed as having an extended duration, it should be understood that the deliberate button press may also be a button press having a specific pattern, such as multiple short-duration button presses within a predetermined period of time, without departing from the scope or intent of this disclosure.

At block 60, once the deliberate button press has been detected, the park or un-park function on the automated valet system management interface 100 has been selected. Selecting the park or un-park function on the system management interface 100 causes the secondary menu bar 104 to be displayed on-screen on the HMI 18. The secondary menu bar 104 is a supplemental menu bar that is non-persistent. That is, the secondary menu bar 104 is only displayed on-screen for certain portions of the duration during which the system management interface 100 is in use. In one aspect, the secondary menu bar 104 is displayed after the selection of the park or un-park functions from within the primary menu bar 102. At block 62, the secondary menu bar 104 presents at least two selectable functions including a confirmation function and a first cancellation function. The confirmation function is activated by pressing a corresponding confirmation button 126, and the first cancellation function is engaged by pressing a corresponding first cancellation button 128. The confirmation function activates the automatic valet system 10 to perform an autonomous park or un-park function selected by the deliberate button press of the park or un-park button 108, 110 within the primary menu bar 102. The first cancellation function 128 cancels the activation of the autonomous park or un-park function selected by the deliberate button press of the park or un-park button 108, 110 within the primary menu bar 102. If the first cancellation function is chosen, the method returns to block 56, and the automatic valet system management interface 100 awaits further operator input. However, if the confirmation function is selected, the method proceeds to block 64.

Turning now to FIG. 4, and with continuing reference to FIGS. 1-3, at block 64 once the operator has pressed the confirmation button 126 to engage the previously selected park or un-park function, the secondary menu bar 104 and the display portion 106 display a first route information 129. Furthermore, the secondary menu bar 104 displays at least one additional selectable function. In one aspect, the first route information 129 includes information about parking locations, parking prices, parking distance, and distance to parking lots, maps, etc. The at least one additional selectable function is a start function having a corresponding start button 130 for engaging the previously selected park or un-park function. Furthermore, once the start button 130 has been selected to engage the previously selected park or un-park function, at block 66 the secondary menu bar 104 displays a second cancellation option (not shown) for a predetermined period of time. During the predetermined period of time, engagement of the previously selected park or un-park function is paused. In one aspect, the predetermined period of time is approximately ten seconds. When the second cancellation option is selected, the method returns to block 56 and the automated valet system management interface 100 awaits further input from the operator. However, if the second cancellation option is not selected, the method proceeds to block 68 where the previously selected automated valet function is engaged. Moreover, while the at least one additional selectable function is discussed as being a start function, it should be appreciated that the additional selectable function may also be a route selection function, a route timing function, a parking lot selection function, etc. Additionally, it should be understood that while the predetermined period of time is described as lasting for approximately ten seconds, the predetermined period of time may have a duration that is longer or shorter than ten seconds without departing from the scope or intent of the present disclosure.

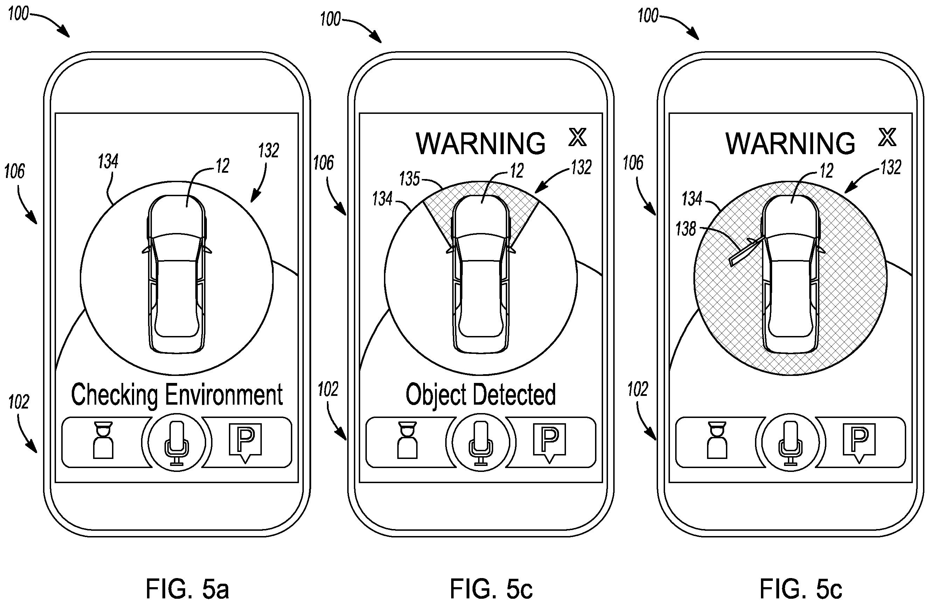

Referring now to FIGS. 5a-c, and with continuing reference to FIGS. 1-4, once the automated park or un-park function has been engaged the display portion 106 presents a first vehicle position or status data 132 at block 70. To generate the vehicle position or status data 132, a plurality of exterior sensors (not shown) mounted to the host vehicle 12 scan the host vehicle's 12 surroundings at block 72. The results of the scans are depicted in the display portion 106 as an image of the host vehicle 12 within a circular graphic 134. The circular graphic 134 is a graphical representation of the data acquired from a plurality of exterior sensors mounted to the host vehicle 12. The data acquired from the plurality of exterior sensor includes information regarding the presence of objects detected within a predetermined radius of the host vehicle 12. When an object is detected within the predetermined radius of the host vehicle 12, as in FIG. 5b, a location of the object is depicted within the circular graphic 134, by displaying a segment 135 of the circular graphic 134 in a contrasting color, and the host vehicle 12 will take an action to avoid the object. In an example in which the circular graphic 134 is colored blue, for an object detected within the predetermined radius, the location of the object is depicted as a solid red segment 136 of the circular graphic 134 corresponding to the area in which the object has been detected. Additionally, the first vehicle position data 132 includes information regarding whether a door 138 of the host vehicle 12 is open. In an example in which a door 138 of the host vehicle 12 is open, the entirety of the circular graphic 134 is displayed in red, as in FIG. 5c, and the automated valet system 10 will prohibit the host vehicle 12 from moving. While the first vehicle position data 132 is described as being displayed in a circular graphic 134, and being displayed in solid blue and red colors, it should be appreciated that the first vehicle position data 132 may also be displayed with other shapes, colors, and patterns without departing from the scope or intent of this disclosure.

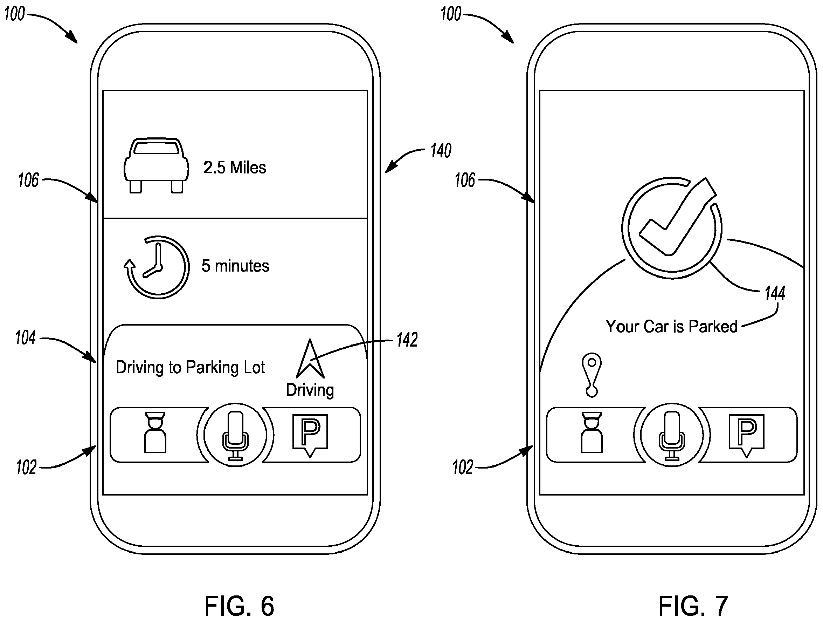

Referring now to FIG. 6, and with further reference to FIGS. 1-5c, once the host vehicle 12 has engaged the park or un-park function, a second vehicle position data 140 is displayed within the display portion 106 at block 74. The second vehicle position data 140 includes a target location. The target location corresponds with the respective location commanded by the park or un-park functions. That is, when a park command has been generated, the target location corresponds to a parking space, a parking lot, or a parking space within a parking lot, and when an un-park command has been generated, the target location corresponds to a position of the operator. Moreover, in an example in which the park and/or un-park commands are generated from the operator's mobile device 14, the park and/or un-park target locations are generated with respect to the position of the operator's mobile device 14, using a position of the host vehicle 12 as a reference position. Similarly, the second vehicle position data 140 includes a distance measurement that is a calculated distance between the operator's mobile device 14 and the host vehicle 12. The second vehicle position data 140 also includes an estimated time to the target location. The estimated time to the target location is an estimate of the quantity of time a route between the host vehicle 12 position and the operator's mobile device 14, and the estimate includes known speed limits, global positioning system (GPS) data, traffic conditions on the route, etc.

As the host vehicle 12 proceeds to complete the park or un-park function, the secondary menu bar 104 is presented to the operator. The secondary menu bar 104 presents at least one selectable function at block 76, including a third cancellation function. When the operator selects the third cancellation function by pressing a corresponding third cancellation button 142, the host vehicle 12 returns to the position from which the host vehicle 12 originated, and the method returns to block 56. That is, for an example in which the automated park function has been engaged, pressing the third cancellation button 142 will cause the host vehicle 12 to return to the operator rather than proceeding to park. Similarly, for an example in which the automated un-park function has been engaged, pressing the third cancellation button 142 will cause the host vehicle 12 to return to a parking location from which the host vehicle 12 had departed. However, when the operator does not select the third cancellation function, the method proceeds to block 78.

Referring now to FIG. 7, and with continuing reference to FIGS. 1-6, once the host vehicle 12 has completed the automated park or un-park function, the display portion 106 presents a written completion message 144 at block 78. In the example of FIG. 7, in which an automated park command has been given to the host vehicle 12, the completion message 144 states that the host vehicle 12 has been parked. Similarly, in an example in which an automated un-park command has been given to the host vehicle 12, the completion message 144 states that the host vehicle 12 has been un-parked, retrieved, or that the host vehicle 12 is otherwise ready for the operator's use. While the completion message 144 has been described as a written message indicating whether the car has been parked or un-parked, it should be understood that the completion message 144 may also be color-coded, a pictogram, a semaphore, etc., and may include additional host vehicle 12 or route status information without departing from the scope or intent of this disclosure. At block 80, the method 50 ends.

By utilizing the automated valet system 10 in conjunction with the plurality of host vehicle 12 sensors 28, an operator of the host vehicle 12 is able to more efficiently, safely, and accurately park and/or un-park the host vehicle 12. Moreover, the automated valet system 10 can be used by the host vehicle 12 operator to provide increased levels of autonomous driving.

The description of the invention is merely exemplary in nature and variations that do not depart from the gist of the invention are intended to be within the scope of the invention. Such variations are not to be regarded as a departure from the spirit and scope of the invention.

## Claims

1. A method (50) for directing a host vehicle (12) to perform automatic valet functions, the method (50) comprising:
receiving a first input to access an automatic valet system (10);
presenting an automatic valet system management interface (100) having at least two selectable functions including an autonomous park function and an autonomous un-park function;
receiving a second input to select one of the at least two functions of the automatic valet system (10);
presenting information related to the selected function;
receiving a third input to direct the automatic valet system (10) to perform the selected function;
presenting an option to cancel the selected function for a predetermined period of time; and
presenting a status of the host vehicle (12) as it performs the selected function.

2. The method (50) of claim 1 wherein the receiving a first input further comprises selecting an automatic valet system (10) in an HMI (18) of a host vehicle (12) and/or selecting an automatic valet system management interface (100) on a mobile device (14).

3. The method (50) of one of the preceding claims, wherein presenting an automatic valet system management interface (100) further comprises presenting a primary menu portion, a secondary menu portion, and a display portion (106) on the mobile device (14).

4. The method (50) of claim 3 wherein the presenting a primary menu portion further comprises presenting a plurality of buttons, each button providing access to one of the selectable functions of the automatic valet system (10).

5. The method (50) of one of the preceding claims, wherein the receiving a second input further comprises pressing a first of the plurality of buttons for an extended duration the receiving a third input further comprises pressing a confirmation button; wherein the confirmation button is displayed in the secondary menu portion only after the first of the plurality of buttons is pressed for the extended duration.

6. The method (50) of claim 5 wherein in response to receiving the third input to the automatic valet system management interface (100), the method (50) further comprises directing the automatic valet system (10) to perform an action corresponding to one or more of the inputs received.

7. The method (50) of claim 6 wherein in response to receiving a second input to select one of the at least two functions of the automatic valet system (10), the method (50) further comprises displaying within the display portion (106) automatic valet system data corresponding to a plurality of vehicle position characteristics, wherein the plurality of vehicle position characteristics includes at least one of a distance measurement, a target location, an estimated time to the target location, a map, and a depiction of objects detected by a sensor array equipped to the vehicle.

8. The method (50) of one of the claims 4 to 7, wherein the plurality of buttons comprise a first button for receiving the second input to command the host vehicle (12) to initiate a park function, a second button for receiving the second input to command the host vehicle (12) to initiate an un-park function, and a third button for receiving the second input to command the host vehicle (12) to initiate the park and/or un-park functions based on a voice command from a user.

9. The method of one of the preceding claims, wherein the receiving the second input to select one of the at least two functions further comprises requiring a user to press the first button or the second button for a predetermined duration of time to activate the automatic valet system (10) to command the vehicle to perform the selected function.

10. A system (10) equipped to perform the method (50) according to one of the preceding claims, the system (10) comprising:
a human machine interface (HMI) (18) disposed within the host vehicle (12);
a parking system configured to autonomously park or un-park the host vehicle (12);
an application accessible through the HMI (18), the application including a primary menu bar (102), a secondary menu bar (104), and a display portion (106) and having a selectable feature disposed in the primary menu bar (102) for selecting a parking system function, and having a selectable feature disposed in the secondary menu bar (104) for engaging the parking system of the host vehicle (12) to perform the parking system function.

11. The system (10) of claim 10, wherein the primary menu bar (102) further comprises a plurality of buttons for selecting parking system functions, and wherein the primary menu bar (102) is persistent throughout the application.

12. The system (10) of claim 11, wherein the plurality of buttons comprises a first button for priming the parking system to command the host vehicle (12) to initiate a park function, a second button for priming the parking system to command the host vehicle (12) to initiate an un-park function, and a third button for priming the parking system to initiate the park and/or un-park functions based on a voice command from a user.

13. The system (10) of claim 12, wherein the first button and second button further comprise a predetermined time, wherein upon being pressed by a user, the first button and/or the second button only activate the parking system to command the vehicle to park and/or un-park if the first and/or second button has been pressed for the predetermined time.

14. The system (10) of claim 13, wherein the secondary menu bar (104) is displayed after the predetermined time has been reached, wherein the secondary menu bar (104) provides a confirmation button and a cancel button.

15. The system (10) of one of the claims 10 to 14, wherein the display portion comprises a status of the host vehicle parking system; wherein the status includes at least a target location, a time to the target location, and a distance to the target location.
